# FASCICULE DE BREVET EUROPEEN

(11) **EP 1 828 955 B1**
(45) Date de publication et mention de la délivrance du brevet: **26.06.2019**
(21) Numéro de dépôt: 05850575.1
(22) Date de dépôt: 21.12.2005
(51) Int. Cl.: G06K 7/00, H01Q 21/24, H01Q 21/28

(54) **AGENCEMENT D'ANTENNES**
ANTENNENANORDNUNG
ANTENNA ARRANGEMENT

(30) Priorité: 21.12.2004 FR 0453126
(43) Date de publication de la demande: 05.09.2007
(73) Titulaire: INVENGO TECHNOLOGIES SARL, 13600 La Ciotat (FR)
(72) Inventeur: TRAN, Tu, 13005 Marseille (FR)
(74) Mandataire: Novagraaf Technologies
(86) Numéro de dépôt international: PCT/FR2005/003233
(87) Numéro de publication internationale: WO 2006/067336

(56) Documents cités:
- WO-A-95/14938
- US-A- 3 689 885
- US-A1- 2002 044 096
- US-A1- 2003 209 601

## Description

La présente invention se rapporte au domaine de la lecture sans contact d'étiquettes électroniques.

La présente invention concerne plus particulièrement un réseau d'antennes et un procédé pour la lecture d'étiquettes électroniques de sorte à optimiser le taux de succès d'étiquettes lues.

La lecture et l'écriture sans contact d'étiquettes électroniques (ou tags ou puces RFID - identification par radio fréquence) n'est réalisée dans un agencement ou réseau d'antennes que dans certaines conditions spatiales optimales (orientation de l'étiquette la plus proche du plan de l'antenne de lecture pour que la surface projetée soit la plus importante) et d'interférences (des ondes électromagnétiques autres que celles de l'antenne de lecture/écriture ne doivent pas venir interférer).

Ces conditions ne sont remplies qu'en partie par les systèmes de l'état de l'art provoquant ainsi des échecs dans les phases de lecture/écriture et par conséquent des erreurs dans les applications de gestion.

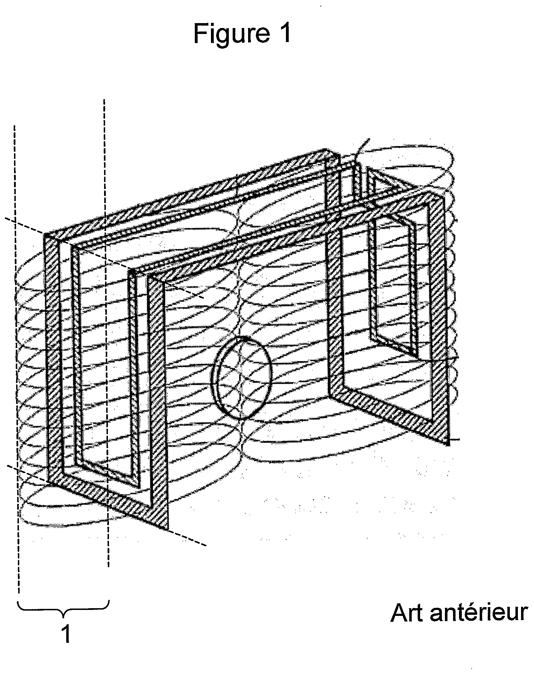

On connaît déjà, par le brevet américain US 6 700 547 (Y. Smirnov et al.), un portique d'interrogation à distance par champ électromagnétique comprenant une antenne couplée à un interrogateur distant pour détecter le passage d'un objet ou d'un animal passant à proximité de l'antenne. L'antenne dispositif est constituée notamment de deux boucles coplanaires constitutives de trois portions - le dessus et les deux parois latérales - formant un portique de détection. Chaque partie de l'antenne est plaquée sur un côté du passage engendrant l'une des trois directions orthogonales du champ électromagnétique 3D produit. Cependant, lorsque les étiquettes électroniques ne sont pas présentées selon l'un des trois axes orthogonaux, les performances se dégradent rapidement, et dans certaines positions, l'étiquette n'est que difficilement lisible par l'arrangement d'antennes. D'autre part, les antennes ne sont pas exploitées dans l'intégralité de leurs possibilités puisque étant coplanaires aux contours du portique, la moitié du champ électromagnétique (la partie externe (1) au portique en référence à la figure 1) n'est pas exploitée.

On connaît également, par le brevet américain US 4 798 175 (J.T. Machnicki et al.), un portique d'interrogation à distance par champ électromagnétique. Le dispositif est constitué d'une seule boucle d'antenne présente sur les parois latérales et hautes du portique, la boucle étant inversée sur l'une des parois latérales afin d'assurer la lecture de l'étiquette électronique quel que soit le sens de traversée du portique. Ce dispositif est semblable à celui qui est évoqué précédemment et présente les mêmes limitations.

Les antennes utilisées dans ces deux dispositifs sont de taille relativement importante puisqu'elles épousent le tour du portique.

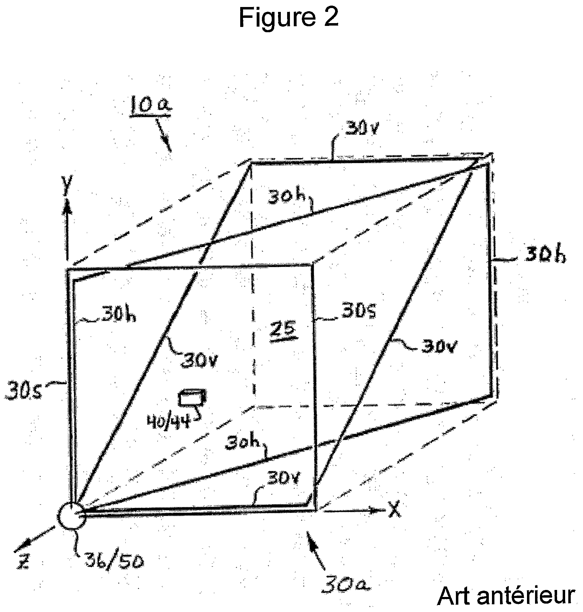

L'art antérieur connaît également, par le brevet américain US 6 696 954 ou US 2002 / 0 044 096 (K. Kwong-Tai Chung), un réseau d'antennes formant une zone de détection de type portique ou passage. Plus particulièrement, le réseau d'antennes comprend une pluralité de boucles antennes disposées selon un réseau rectangulaire, lesquelles antennes transmettent/reçoivent des signaux électromagnétiques ayant des composantes tri-dimensionnelles. Les antennes sont également couplées à un processeur par un filtre et des interrupteurs sélectifs. En référence à la figure 2, le réseau d'antennes comprend trois boucles, la première 30s, dans le plan X-Y, entoure le passage à l'entrée ou la sortie de celui-ci. Les deuxième et troisième boucles 30v et 30h sont orientées en diagonale (rotation selon, respectivement l'axe X et l'axe Y) le long de la zone de détection selon un angle sensiblement égal à 45° avec le plan X-Y. Deux antennes indépendantes peuvent également être ajoutées sur les deux parois latérales du passage. L'agencement des antennes définit ainsi le parallélépipède, volume de la zone de détection. Cependant, le dispositif proposé présente également des limites notamment parce qu'il permet qu'une étiquette électronique traverse le portique sans faire un angle inférieur à 45°. De plus, il existe des positions dans lesquelles le tag fait un angle de 90° avec les deux antennes 30v et 30h du dispositif, en particulier lorsque le tag est situé au centre de l'installation (où il n'est pas sujet à l'influence des antennes latérales) ce qui constitue le cas le plus défavorable pour la lecture ou l'écriture du tag. De ce fait, le taux de succès de lecture des étiquettes n'est pas satisfaisant pour des applications nécessitant moins de 1% d'échec.

On connaît également des systèmes générant un champ électromagnétique tridimensionnel par l'utilisation de changement de phase dans les différentes antennes du dispositif. Ceci est notamment le cas dans la demande de brevet PCT WO 99/050780 (Gemplus) qui décrit un dispositif de lecture sans contact des étiquettes électroniques pour alimenter ces dernières quelle que soit l'orientation dans l'espace de l'enroulement inductif du circuit accordé de l'antenne. Le dispositif comprend trois antennes planaires disposées dans trois plans orthogonaux de manière à créer trois champs orthogonaux suivant les axes d'un trièdre rectangle. Ces antennes sont alimentées par des courants en phase à la fréquence porteuse haute fréquence et modulées en amplitude par des fonctions du temps qui peuvent être des fonctions sinusoïdales de fréquences différentes.

De tels systèmes présentent certaines limitations, entre autres, la complexité de réalisation d'un système de changement de phase. En effet de nombreux paramètres (R, L, C, matériaux utilisés, surface et forme des antennes et tags) rendent le système instable. Par exemple, pour un système A comprenant deux antennes A₁ et A₂, chaque antenne a deux composantes électroniques d'adaptation soit (A₁, (a,b)) et (A₂, (a',b')) + 2 composantes pour le changement de phase du système constitué des deux antennes (A, (a'',b'')) donnant au total six paramètres dépendants les uns des autres à prendre en considération lors du réglage.

On connaît également, par le document US 3 689 885, un système d'antennes dépendantes les unes des autres puisque en utilisation, une antenne est utilisée pour fournir l'énergie à une étiquette électronique et une autre antenne est utilisée pour la lecture. Cette dépendance nécessite le tuning (accord d'impédance entre l'antenne et le lecteur en général à 50Ω et 0°) approprié des antennes les unes par rapport aux autres pour permettre le bon fonctionnement de l'ensemble. Un tel tuning est fastidieux à obtenir puisqu'une modification sur l'une des antennes modifie également l'accord des autres antennes, cet accord étant alors obtenu par dichotomie après de nombreuses modifications sur les différentes antennes. Puisque les antennes électromagnétiques « se voient » (c'est-à-dire s'influencent mutuellement), on souhaite, dans la présente invention, s'affranchir de telles contraintes en utilisant des antennes indépendantes, c'est-à-dire permettant à la fois l'alimentation en énergie des étiquettes et la lecture de celles-ci.

On connaît également, par le document US 2003 / 0 209 601, un système de suivi d'articles à travers une pluralité de stations, lesquelles présentent des réseaux d'antennes. De tels réseaux comprennent une pluralité d'antennes verticales, horizontales ou en biais, activées individuellement et séquentiellement. Ce réseau peut se diviser en plusieurs zones (A, B, C, D) dans lesquelles au plus deux antennes (720 ; 730, 735 ; 740, 745 ; 750, 755) réalisent la lecture des étiquettes. Cependant, cette solution ne permet pas une lecture optimale des étiquettes électroniques traversant l'agencement d'antennes puisque, à un emplacement donné à l'intérieur de l'agencement, il est possible de faire traverser une étiquette sans qu'elle fasse un angle de 45° maximum avec l'une des antennes du réseau, cette configuration permettant une optimisation de la lecture de l'étiquette.

On connaît également, par la demande de brevet WO 95 / 14 938, un appareil muni de plusieurs antennes pour permettre l'identification, la localisation et l'orientation d'une étiquette électronique. L'objectif de cette invention n'est pas d'optimiser la lecture en garantissant un taux élevé de réussite, mais réside dans des moyens de détermination de la position de l'étiquette. Il est à noter que cette solution n'utilise pas qu'un seul lecteur pour l'ensemble des antennes, et qu'elle met en oeuvre des antennes à la géométrie complexe (antennes en « C » ou « L » page 10). On vise donc, au travers de la présente invention, un agencement d'antennes à géométrie simple, c'est-à-dire des antennes planes, en minimisant la complexité et les coûts par l'utilisation d'un seul lecteur.

Une autre problématique est également traitée dans le cadre de la présente invention : lorsque les surfaces d'antennes sont en regard, les champs magnétiques respectifs de chacune des antennes interfèrent l'un avec l'autre conduisant à des phénomènes de dérèglement et donc de mauvais fonctionnement. Ces phénomènes appelés « couplages magnétiques mutuels » sont d'ordre physique et il est difficile de compenser ces phénomènes de couplage d'antennes utilisées dans des dispositifs équivalents.

On connaît, par le brevet US 5 572 226 (J.R. Tuttle), un dispositif d'antennes sphériques pour la lecture/écriture sans contact d'étiquettes électroniques, ainsi qu'un procédé pour activer successivement l'une des antennes du dispositif. Plus particulièrement, le dispositif effectue une commutation d'une antenne à l'autre tout en contrôlant le réveil des étiquettes qui sont activées par l'une ou l'autre des antennes. Cette solution dépend grandement de la réponse fournie par les étiquettes à la sollicitation successive de chacune des antennes. Elle ne permet pas d'appréhender la problématique des interférences entre antennes de surfaces sensiblement parallèles. La présente invention est définie par les revendications indépendantes 1 et 11.

La présente invention entend remédier aux inconvénients de l'art antérieur en proposant un réseau d'antennes électromagnétiques indépendantes traversant le volume de détection de telle sorte que les droites d'intersection des plans des antennes deux à deux traversent toutes un volume de détection centré dans le volume défini par le réseau. Idéalement, toute étiquette électronique traversant la zone fait un angle inférieur à 45° avec au moins un des plans des antennes. Cette condition de positionnement de l'étiquette par rapport à l'antenne lui assure d'être lue ou écrite de façon optimale. Dans une réalisation plus avancée, la présente invention permet également d'accroître le taux de détection d'étiquettes électroniques statiques dans un volume défini.

L'invention permet également d'offrir une solution au problème d'interférences inter-antennes de dispositifs similaires en prévoyant des moyens de commutation d'antennes ainsi que des moyens de tuning et détuning propres à chacune des antennes, et donc d'adaptation et non-adaptation de l'impédance.

Le dispositif selon la présente invention permet de :
- simplifier la construction et la mise en oeuvre du réseau par l'utilisation d'antennes indépendantes ;
- réduire la taille de (des) l'antenne(s) en surface et volume puisque les antennes sont indépendantes, traversent le volume et n'en épousent pas le contour ;
- utiliser au mieux le volume de détection puisque les deux cotés du champ électromagnétique de toute l'antenne (de part et d'autre de l'antenne) sont mis à contribution ;
- avoir des tags qui, dans la version dynamique, se retrouvent dans le plan d'une des antennes avec un angle faible, c'est-à-dire inférieur à 45° (et proche dans la version statique) obtenant ainsi un couplage maximum et une lecture optimisée notamment dans les conditions difficiles de couplage entre tags lors de présence de métal,
- réduire le nombre d'antennes pour un taux de lecture d'étiquettes électroniques au moins équivalent aux dispositifs existants,
- éviter une gestion compliquée de séquencement des antennes lors du déplacement d'un objet dans l'agencement.

Ainsi, la présente invention répond particulièrement bien à la problématique de la lecture d'étiquettes lorsqu'elles sont en forte densité. En effet, lorsque que plusieurs tags à lire sont proches les uns des autres et que la surface de leurs antennes se masquent, ceux-ci se désaccordent et une trop faible quantité est lue correctement. Par la présente invention, ce groupe de tags passe à travers un arrangement d'antennes ou alors l'arrangement d'antennes (cas du tag fixe) le traverse et la lecture est réalisée de façon performante. C'est notamment le cas des vêtements rangés dans des cartons et dans lesquels les tags associés aux vêtements se chevauchent ou s'empilent.

La présente invention répond également bien à la problématique de lecture d'étiquettes dans un environnement fortement métallique. En effet, la présence de métal tend à diminuer les distances de lecture des étiquettes. L'invention permet, par déplacement des étiquettes dans l'arrangement ou par la mise en fonctionnement indépendante des antennes de l'arrangement (cas du tag fixe) de réaliser la lecture de l'étiquette.

À cet effet, l'invention concerne, dans son acception la plus générale, un réseau d'antennes pour la lecture ou l'écriture sans contact d'étiquettes électroniques dans un volume de détection, comprenant trois ou quatre antennes planes et indépendantes connectés séquentiellement à un unique lecteur par des moyens interrupteurs, caractérisé en ce que :
- les plans des antennes traversent un volume de lecture/écriture/détection optimale centré dans ledit volume de détection,
- pour tout couple d'antennes desdites antennes, l'intersection de leurs plans est comprise dans le volume de lecture/écriture optimale, et
- les antennes étant disposées de telle sorte que toute direction dans ledit volume de lecture/écriture optimale fait un angle d'au plus 45° avec l'un au moins des plans desdites antennes.

On définit cette zone de lecture optimale comme la zone où l'efficacité de lecture d'une étiquette électronique quelle que soit son orientation est supérieure à un seuil prédéfini, par exemple 99,9%. On fait varier les dimensions de cette zone en jouant sur différents paramètres du réseau d'antennes : puissance d'alimentation, taille des antennes...

Dans la configuration de l'invention, toutes les intersections des plans desdites antennes prises deux à deux, sont comprises dans la zone de détection

Selon différents modes de réalisation :
- lesdites intersections coupent un volume de détection optimale centré dans ladite zone de détection, ledit volume de détection optimale ayant une section similaire et une surface comprise entre 10 et 75% de celle de ladite zone de détection, fournissant ainsi un volume « idéal ou optimal» pour la détection des étiquettes.
- ledit réseau comprend trois antennes octogonales décalées de 120° autour de l'axe longitudinal de ladite zone de détection,
- ledit réseau comprend quatre antennes rectangulaires, la zone de détection est un parallélépipède rectangle et chaque antenne traverse la zone de détection depuis l'un des côtés de l'extrémité entrante de la zone de détection jusqu'au côté opposé de l'extrémité opposée.
- lesdits moyens interrupteurs interfaçant ledit lecteur et lesdites antennes sont commandés par ledit lecteur et permettant d'alimenter indépendamment en énergie lesdites antennes,
- ledit réseau comprend, en outre, un blindage contre le parasitage et la pollution extérieurs,
- ledit volume de lecture optimale a une largeur au moins égale à la distance parcourue par l'étiquette électronique dans le réseau pour permettre la lecture des informations qu'elle contient.

L'invention concerne également un système de détection d'étiquettes électroniques dans un volume de détection, comprenant au moins deux réseaux d'antennes, lesdits réseaux d'antennes étant imbriqués les uns dans les autres et décalés les uns par rapport aux autres.

On entend par « imbriqué » le fait que les réseaux d'antennes sont sensiblement de même dimension et ont leur direction de traversée sensiblement identique, leur intersection définissant le volume de détection du système.

Dans un mode de réalisation, les décalages entre lesdits réseaux sont sensiblement égaux à la largeur du volume de la zone de lecture optimale dans l'orientation desdits décalages.

Dans un autre mode de réalisation, le lecteur est apte à piloter les moyens interrupteurs pour alimenter séquentiellement lesdites antennes une à une, réseau après réseau

On comprendra mieux l'invention à l'aide de la description, faite ci-après à titre purement explicatif, d'un mode de réalisation de l'invention, en référence aux figures annexées :
- les figures 1 et 2 représentent des dispositifs selon l'état de l'art, et ont déjà été décrites ci-dessus ;
- la figure 3 illustre un mode de réalisation de la présente invention ;
- la figure 4 est une vue traversante d'un exemple de zone de détection selon la présente invention ;
- la figure 5 illustre une zone de lecture optimale d'un réseau selon la présente invention ;
- la figure 6 illustre un schéma de principe de la présente invention ;
- la figure 7 représente un système selon la présente invention pour la détection de tags statiques ;
- la figure 8 représente un exemple d'un réseau qui ne fait pas partie de l'invention. La figure 9 représente un exemple de réalisation d'un réseau comprenant trois antennes selon la présente invention ; et
- les figures 10 et 11 illustrent l'utilisation optimale des champs électromagnétiques des antennes dans l'invention.

### Réseau à quatre antennes

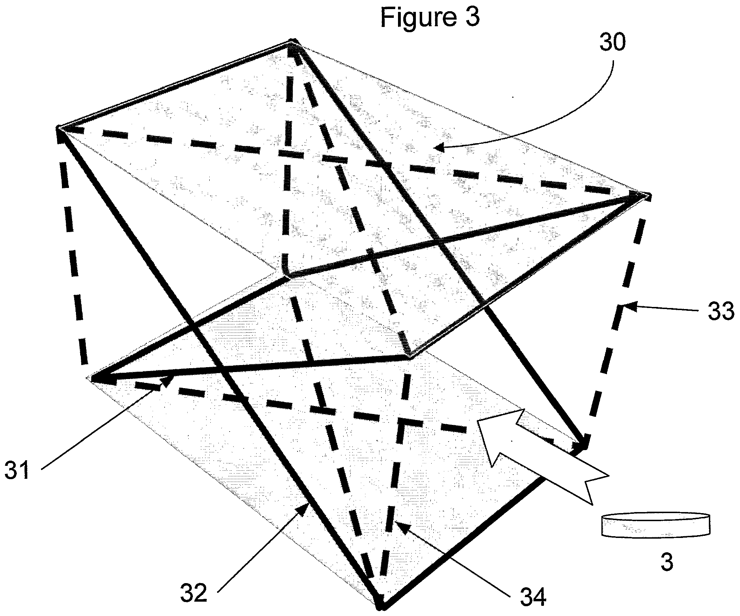

En référence à la figure 3, un mode de réalisation de la présente invention comprend quatre antennes planes indépendantes, de forme boucles rectangulaires et/ou elliptiques, formant un volume de détection de forme parallélépipédique et/ou ovoïde. En général toute forme géométrique d'antenne s'adaptant au volume à délimiter en fonction de l'application recherchée. On entend par « plane », les antennes pour lesquelles les brins rayonnant le champ électromagnétique et utiles à la lecture du tag appartiennent au même plan. On parle alors de plan de l'antenne pour le plan contenant l'antenne et de surface intérieure de l'antenne pour la surface de ce plan délimitée par l'antenne.

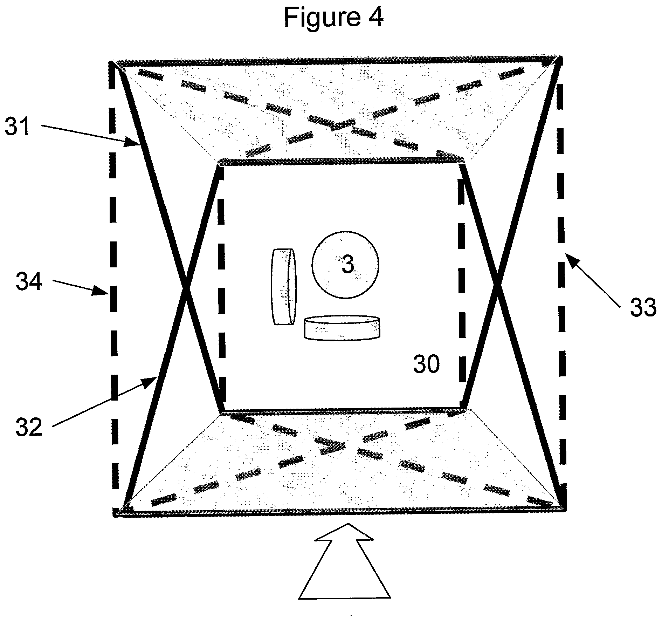

La figure 4 présente une vue traversante de la zone de détection (30) délimitée par les quatre antennes (31 à 34) et de trois étiquettes électroniques (3) traversant la zone.

La zone de détection (30) est le plus petit volume régulier comprenant les antennes. Elle est formée par les antennes elles-mêmes et constitue, dans le présent exemple un parallélépipède rectangle dont deux extrémités opposées peuvent être assimilées à une extrémité d'entrée et une extrémité de sortie de la zone. Un des buts de l'invention est de détecter les étiquettes électroniques (ou tags, ou puces RFID) traversant cette zone quelle que soit l'orientation de ces étiquettes.

Dans le mode de réalisation des figures 3 et 4, les quatre antennes sont planes et de formes rectangulaires.

Le réseau d'antennes selon la présente invention présente deux extrémités d'entrée et de sortie au travers desquelles une étiquette électronique (3) traverse le dispositif (suivant la flèche de la figure 3). Ces extrémités sont de forme rectangulaire et sont délimitées par des éléments d'antennes (des fils conducteurs), définissant de la sorte un bord droit d'entrée, un bord gauche d'entrée, un bord supérieur d'entrée (partie haute) et un bord inférieur d'entrée (partie basse). On distingue donc l'extrémité d'entrée au travers de laquelle l'étiquette (3) entre dans le réseau (extrémité droite sur la figure 3) et l'extrémité de sortie, à l'opposé. Le réseau comprend une première antenne (31) traversant la zone de détection (30) depuis la partie haute de l'extrémité entrante (c'est-à-dire qu'un élément conducteur de l'antenne 31 délimite le bord supérieur de l'extrémité d'entrée) jusqu'à la partie basse de l'extrémité de sortie, c'est-à-dire que deux côtés opposés de l'antenne rectangulaire constituent les côtés haut et bas de, respectivement, l'entrée et la sortie de la zone. Les deux autres côtés de l'antenne rectangle correspondent, chacune à une diagonale des deux côtés du volume de détection. On entend par « traversant » le fait que le plan de l'antenne coupe le volume de détection en deux volumes non nuls. Cela implique donc que l'antenne ne constitue pas une paroi latérale (un bord) du volume de détection.

Une deuxième antenne (32) traverse la zone de détection depuis la partie basse de l'extrémité entrante jusqu'à la partie haute de l'extrémité de sortie. En quelque sorte, les deux antennes (31) et (32) sont symétriques par rapport à un plan horizontal coupant le volume en deux parties égales et forment ensemble une croix.

La deuxième paire d'antennes (33) et (34) est également symétrique selon un plan vertical passant au milieu du volume.

L'antenne (33) traverse le volume depuis le côté droit de l'entrée jusqu'au côté opposé (gauche) de la sortie. Deux côtés opposés de l'antenne réalisent les limites droite et gauche de, respectivement, l'entrée et la sortie de la zone, alors que les deux autres côtés de l'antenne correspondent, chacune, à une diagonale du plafond et du sol de la zone de détection.

De même, l'antenne (34) traverse le volume depuis le côté gauche de l'entrée jusqu'au côté opposé (droit) de la sortie.

Dans ce mode de réalisation, les extrémités d'entrée et de sortie sont délimitées par un côté de chacune des quatre antennes. Les étiquettes traversant la zone de détection (30) entrent et sortent par ces deux extrémités.

Dans cette configuration fortement symétrique, l'intersection des antennes 31 et 32 est un segment reliant le milieu de chaque paroi latérale et l'intersection des antennes 33 et 34, un segment reliant le milieu du plafond et du sol de l'arrangement. En outre, les intersections entre les autres combinaisons de paires d'antennes sont les diagonales du parallélépipède. On voit donc que l'ensemble des intersections des antennes coupe le centre du parallélépipède. Il y a, aux environs de ce point, une zone privilégiée pour la détection/lecture/écriture des étiquettes. Cette zone centrale est désormais considérée comme une zone de détection, lecture ou écriture optimale, laquelle zone est traversée par l'ensemble des intersections précédemment évoquées.

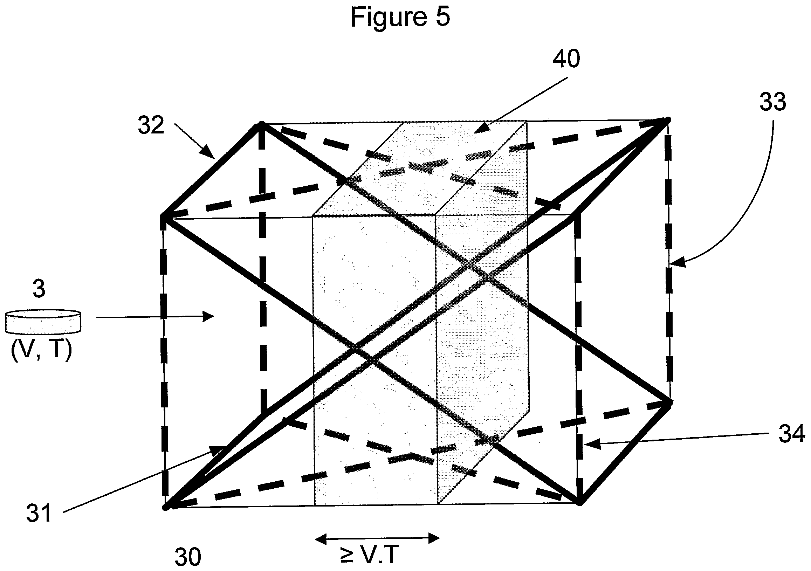

L'invention répond également aux exigences de la détection d'étiquettes électroniques statiques. En référence à la figure 5, la zone de lecture (ou détection ou écriture) optimale (40) précédemment évoquée est délimitée comme un tronc centré du parallélépipède de détection (30). Elle permet la lecture d'une étiquette statique (ou en déplacement) par au moins une des quatre antennes (31 à 34) quelle que soit l'orientation de cette étiquette. Les dimensions de cette zone dépendent des performances de lecture des antennes, à savoir une distance de lecture optimale comprise entre 10 et 20 cm.

Pour que l'arrangement d'antennes offre à la fois des performances en lecture statique et dynamique (déplacement des étiquettes), la largeur de cette zone (40) dans le sens du déplacement des étiquettes est conditionné par plusieurs paramètres :
- Vitesse V de déplacement de l'étiquette,
- Temps T de lecture d'une étiquette ; on peut compter environ 3ms pour la lecture de l'étiquette, cette valeur variant en fonction de la taille des données de l'étiquette (96 bits utiles), de la vitesse de transfert des données (100 kbit/s)

Il convient alors de choisir une largeur de zone (40) au moins égale à V x T.

Une dimension optimale de réalisation d'un tel réseau d'antennes est de 50 x 50 cm pour des tunnels de détection de linge, de bagages, d'articles à passer en caisse (grande distribution).... Mais les dimensions du réseau selon la présente invention peuvent varier sur une large gamme : tunnel d'ouvertures de dimensions variant couramment de 30 x 30 cm à 350 x 350 cm. Certaines antennes proposées sur le marché ont des dimensions de l'ordre de 10 x 2 m. Les dimensions, formes, matériaux des antennes, types de tags, dimension du tag, puissance d'émission/réception sont des paramètres qui influent les uns sur les autres et ne permettent pas de définir des standards de fabrication.

La présente invention s'applique pour toute fréquence appartenant à la gamme de fréquence existante relative à la détection d'objets dans un champ électromagnétique, par exemple de type radio fréquence (RF) : 13,56 MHz (HF), 915 MHz (UHF)...

De façon générale, la puissance de rayonnement des antennes est de l'ordre de 0.2 à 7 watts pour une portée de 0 à 150 cm de chaque côté de l'antenne en fonction des caractéristiques de dimensions définies préalablement.

Un tunnel de dimension 40 x 40 cm, de puissance 2W et de fréquence de fonctionnement 13,56 MHz permet l'écriture et la lecture d'étiquettes électroniques passives ARIO 20 SM (nom commercial) avec une plage de lecture pouvant aller jusqu'à 40 cm.

De même, le tunnel 50 x 50 cm de puissance 5W est associé aux étiquettes électroniques ARIO 70 SM (nom commercial). On pourra, par exemple, utiliser des antennes standard de facteur qualité compris entre 30 et 200.

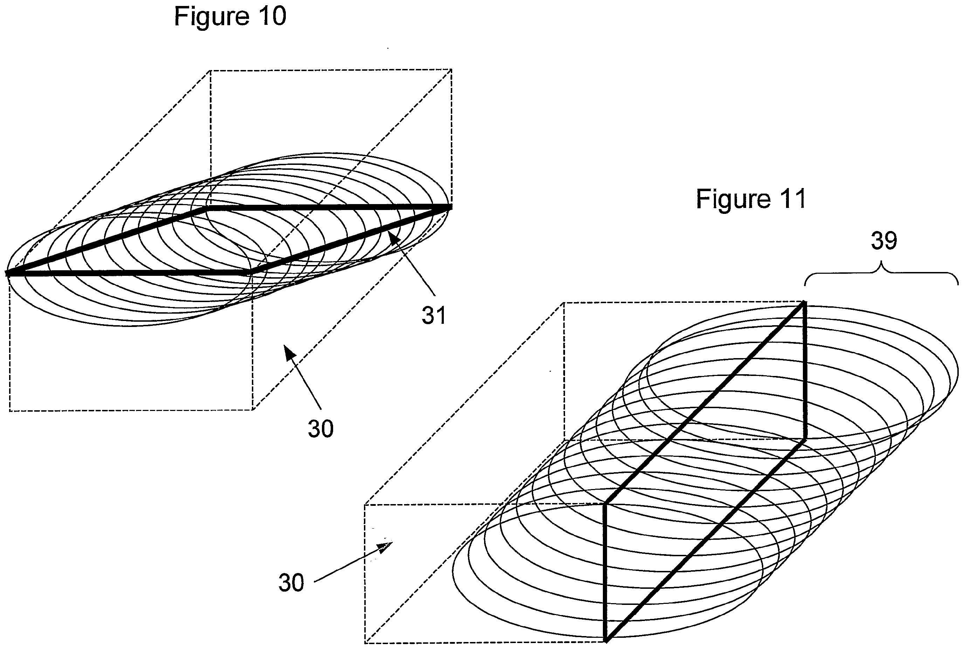

En référence à la figure 11, chacune des quatre antennes du réseau est traversante de la zone de détection en ce que les champs électromagnétiques de part et d'autre de l'antenne appartiennent au volume de détection (d'où les deux volumes non nuls séparés par le plan de l'antenne). Par opposition, les antennes plaquées sur le bord du volume ont leur champ électromagnétique extérieur (39) qui n'est pas utilisé pour la détection (figure 12). La présente invention assure donc une meilleure utilisation des ressources antennes.

Le réseau selon la présente invention s'applique particulièrement à la réalisation de tunnels de détection, de portiques (dock door), de convoyeur de détection, de tout système comprenant le passage d'objets à travers un arrangement d'antennes dans l'espace ayant la propriété de lire et/ou d'écrire des tags RFID ou étiquettes électroniques (tube, corridor, ...).

Afin d'accroître ses performances, le réseau d'antennes comprend un blindage qui le protège de tout ou partie des bruits parasites venant de l'extérieur et contre l'émission d'une pollution électromagnétique vers l'extérieur (vers un utilisateur par exemple). Un tel blindage peut consister en un caisson extérieur épousant la forme du volume de détection en laissant libre l'accès aux extrémités d'entrée et de sortie. Un tel caisson peut être en matériau ferromagnétique, par exemple de la ferrite, englobant le réseau d'antennes.

Lorsqu'une étiquette électronique de type RFID, antenne plane à enroulement circulaire, traverse la zone de détection, elle traverse au moins trois antennes du fait de l'agencement spécifique décrit précédemment.

Grâce à l'agencement spatial des antennes, toute étiquette traversant ce réseau se présente avec une surface inclinée de moins de 45° avec le plan d'au moins une antenne du réseau. Cette limite de 45° assure une surface projetée au moins égale à 50% de la surface de l'étiquette, cette portion de surface garantissant la lecture/détection/écriture de l'étiquette ; on parle de surface de regard entre l'antenne et l'étiquette.

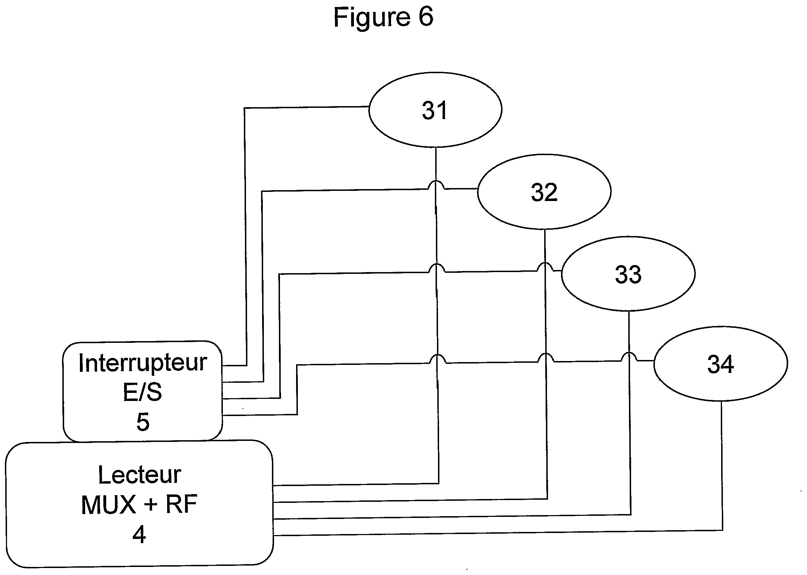

En référence à la figure 6 et afin de diminuer/éviter toute interférence entre les différentes antennes (31, 32, 33, 34) du réseau, ce dernier est muni de moyens jouant le rôle d'interrupteur (5). Ces moyens interrupteurs sont pilotés par une application de pilotage.

Ces moyens (5) permettent d'accorder sélectivement chacune des antennes alors que les autres ne sont pas alimentées (désaccordées). Ces moyens sont assimilables à un dispositif de contrôle d'accord d'impédance entre les antennes du réseau à 50 ohms sans déphasage (déphasage = 0°) et le lecteur à la fréquence de résonance de 13.56 Mhz. Eventuellement, ces moyens d'accord sont un circuit électronique disposé à la base de l'antenne à laquelle il est associé, les moyens d'interrupteurs (5) permettant d'alimenter (respectivement couper l'alimentation) ce circuit pour accorder (respectivement désaccorder) l'antenne. Les paramètres d'accord sont déjà fixés dans le circuit électronique, l'accord ne consistant plus qu'à appliquer ces paramètres pour faire entrer l'antenne en résonance.

Les moyens interrupteurs (5) peuvent être des interrupteurs commandés ouvrant de façon indépendantes les circuits des antennes (31 à 34).

Un autre mode de réalisation prévoit de créer un court-circuit dans les antennes non utilisées afin de déplacer la fréquence de résonance au-delà de la fréquence d'utilisation, limitant ainsi les interférences. Il reste cependant une boucle parasite qui perturbe et absorbe une partie du champ électromagnétique de l'antenne utilisée.

L'alimentation des antennes (31 à 34) est une fonction du temps. Par exemple, chacune des antennes est alimentée successivement pendant une durée dₐₙₜₑₙₙₑ qui peut varier d'une antenne à l'autre. La période du réseau au bout de laquelle une antenne est de nouveau ré-alimentée est la somme des durées dₐₙₜₑₙₙₑ de l'ensemble des antennes (31 à 34) du réseau.

Pour réaliser la lecture des étiquettes traversant, le réseau est muni d'un unique lecteur (4).

Ce lecteur unique est utilisé pour l'ensemble des antennes du réseau. Ce lecteur (4) présente des moyens de multiplexage (MUX) permettant de le connecter successivement aux différentes antennes du réseau pour fournir la puissance électrique nécessaire à ces dernières pour la détection/lecture/écriture des étiquettes. Par ce biais, il joue le rôle d'interrupteur pour l'alimentation des antennes. Une fois connecté à une antenne, le lecteur effectue la lecture des étiquettes électroniques dans le voisinage de cette antenne. L'avantage d'un unique lecteur, est de disposer, pour un coût semblable à celui de plusieurs lecteurs « simples », de plus d'intelligence (logicielle) pour séparer les différentes étiquettes détectées (algorithme de séparation des tags).

L'ensemble des moyens interrupteurs (5), de multiplexage (MUX) et de lecture/écriture/détection sont commandés par un processeur électronique (mettant en oeuvre, par exemple un logiciel) réalisant la synchronisation des opérations comme présentée ci-dessous.

En fonctionnement :
A t = 0 ms, l'interrupteur (5) réalise la commutation sur l'antenne 31 pour réaliser l'accord (tuning) de l'antenne avec le lecteur. De façon quasi instantanée, le multiplexeur MUX alimente en puissance l'antenne 31. Le lecteur effectue alors les opérations de lecture/écriture nécessaires sur les étiquettes présentes dans la zone de détection de l'antenne 31.

A t = 100 ms, l'antenne 31 est désaccordée par l'interrupteur (5) et l'alimentation coupée par le MUX. De façon quasi-instantanée (ici au regard des 100 ms, par exemple en 2 ms correspondant aux temps de commutations des différents éléments électroniques), l'interrupteur (5) permet l'accord de l'antenne suivante 32 et le MUX fournit la puissance électrique à l'antenne.

Ces opérations sont successivement réalisées pour l'ensemble des antennes, un temps de cycle étant défini lorsque l'ensemble des antennes a été alimenté, par exemple 400 ms).

A titre d'exemple le multiplexage d'un arrangement d'antennes se déroule de la façon décrite ci-dessous.

Initialement, toutes les antennes sont « ouvertes », non accordées et la puissance RF envoyée est nulle.

Le processus de lecture débute par la détection de l'objet (via un capteur) équipé d'un tag passant à travers l'agencement d'antennes. A la réception de donnée l'application de pilotage commande de manière adaptée les moyens d'interrupteurs et de lecteur.

A T1, le lecteur active l'accord de l'antenne 1 par un moyen d'interrupteur qui établit une commutation entre ladite antenne et un circuit passif qui lui est propre (les valeurs des composants, notamment les valeurs des capacités et des inductances, sont spécifiques à l'antenne qui est associée au circuit de telle sorte que lorsque le circuit est connecté à l'antenne cette dernière est accordée et opérationnelle).

A T2 = T1 + temps de stabilisation du relais de l'antenne 1 (de l'ordre de la milliseconde), le lecteur alimente en puissance RF l'antenne 1 par le multiplexeur MUX et débute la phase de lecture/écriture/détection du tag.

A T3 = T2 + temps de lecture/écriture/détection (de l'ordre de la centaine de ms), le lecteur coupe la RF/puissance et le lecteur désactive l'accord de,l'antenne 1.

A T4 = T3, le lecteur active l'accord de l'antenne 2.

A T5 = T4 + temps de stabilisation du relais de l'antenne 1 (de l'ordre de la ms), le lecteur alimente en puissance RF l'antenne 2 et débute la phase de lecture/écriture/détection du tag.

A T6 = T5 + temps de lecture/écriture/détection (ne dépasse pas la centaine de ms), le lecteur coupe la RF/puissance et le lecteur désactive l'accord de l'antenne 2.

Le processus est réitéré en boucle tant qu'il n'y a pas d'instructions de fin de lecture.

Le lecteur pilote l'unique interrupteur afin qu'il réalise la commutation de chacune des antennes dans le cadre de l'activation ou la désactivation de l'accord.

La connexion entre l'antenne et le lecteur peut être réalisée à l'aide d'un câble RG58/ 50 Ohms ou RJ174 ou par simple fil électrique. La connexion du boîtier de contrôle de tuning peut être assurée par un câble torsadé blindé. Le type de signal entre l'antenne et le lecteur est une tension pouvant être par exemple de 5v (TTL) ou de 24V de type industriel.

L'alimentation du lecteur peut être de l'ordre de 85v à 250v et la puissance RF sur les antennes peut être de l'ordre d'une centaine de milliwatt à quelques watts.

Le lecteur multiplexe la partie radio on/off dans le cadre de la déconnexion de l'antenne du lecteur.

Le temps de multiplexage dépend des caractéristiques de la puce utilisée, du type de tag et de ses performances, de la vitesse à laquelle les tags traversent l'arrangement d'antennes, du nombre de tags et de la taille des antennes.

Il est envisagé d'adapter les temps d'utilisation (pour la détection/lecture/écriture) des antennes en fonction des applications. Par exemple, pour un convoyeur transportant majoritairement des cartons sur le côté desquels sont apposées des étiquettes électroniques (donc ces étiquettes sont verticales), on privilégie des temps d'utilisation plus longs pour les deux antennes verticales 33 et 34.

Des tests ont été réalisés sur un réseau selon la présente invention, de taille sensiblement égale à 51 cm x 51 cm x 51 cm. Ce réseau est couplé à un tapis roulant pour une utilisation similaire à celle des analyseurs d'objets aux douanes des aéroports. Un sac contenant 50 objets à étiquette électronique est introduit dans le volume de détection.

Pour une vitesse de déplacement de 25 cm/s, le taux de lecture est de 100%.

À 38 cm/s, 97% des étiquettes ont été lues et séparées, et à 50 cm/s, 95% des tags ont été lus.

Le but de la présente invention est également la détection d'étiquettes électroniques statiques dans un volume défini.

Comme mentionné précédemment, le réseau permet la lecture d'étiquettes statiques dans un volume de lecture optimale (40 en référence à la figure 5).

La présente invention propose d'utiliser au moins deux réseaux d'antennes comme décrits précédemment et agencés de telle sorte que leurs zones de lecture optimale viennent se compléter pour couvrir une zone plus large.

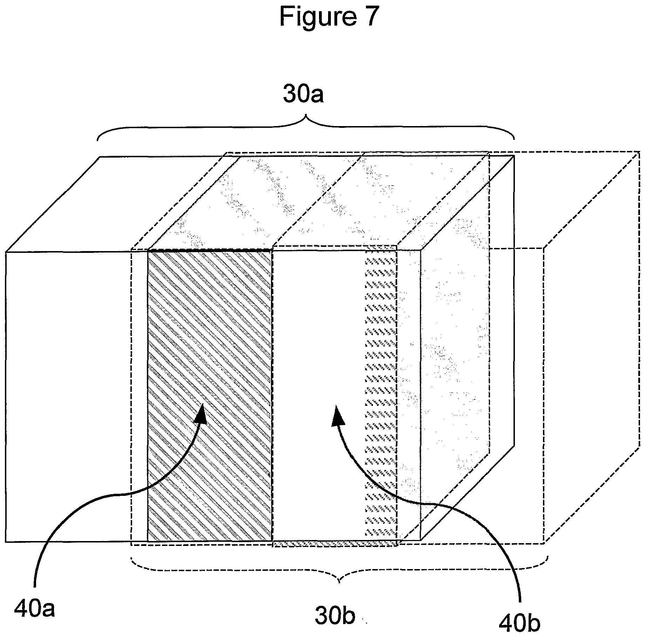

En référence à la figure 7, le système est composé de deux réseaux d'antennes (30a et 30b) sensiblement identiques avec la même orientation, c'est-à-dire que les directions de traversée des deux réseaux sont sensiblement les mêmes, par exemple l'angle entre les deux directions étant inférieur à 10°. Les deux réseaux sont décalés l'un par rapport à l'autre d'une distance égale à la largeur de la zone de lecture optimale (40) de façon à créer deux zones de volume équivalent de lecture optimales contiguës, agrandissant ainsi le volume de détection statique du tunnel : les champs électromagnétiques produits par les mêmes antennes des deux réseaux ne balayent pas le même volume.

Cet agencement permet, pour tout point de l'espace du volume défini (toutes les zones optimales 40), de lire des étiquettes quelle que soit leur orientation (puisque les orientations de lecture du premier réseau s'ajoutent à celle du deuxième réseau).

Pour deux réseaux cubiques de dimension 46 cm et 51 cm imbriqués et décalés et pour un sac statique comprenant 50 articles, des tests ont permis d'identifier 99,5% de l'ensemble des articles placés dans la « double » zone centrale de lecture optimale

Un système de détection d'étiquettes statiques selon la présente invention peut contenir autant de réseaux d'antennes que nécessaire et dans des agencements selon toutes les directions de l'espace afin de couvrir un volume défini.

La superposition d'antennes appartenant à des réseaux différents ne pose aucune difficulté et toute technique connue de l'art antérieur peut être utilisée.

Dans ce système de détection statique, le processeur électronique pilote les interrupteurs (5) et MUX pour que les antennes soient alimentées séquentiellement une à une, réseau après réseau ou bien de façon beaucoup plus aléatoire.

### Réseau à trois antennes

La présente invention s'applique également à des agencements d'antennes comprenant trois antennes et à des systèmes constitués de l'agencement d'au moins deux réseaux d'antennes, comme décrit précédemment. Il est également envisagé que des réseaux d'antennes disparates selon la présente invention (par exemple, réseaux à trois et quatre antennes) soient associés dans un même système de détection pour accroître le volume de détection optimale (40).

Trois antennes est le nombre optimal d'antennes pour la réalisation de disposition dédiés à la détection/lecture/écriture 3D d'étiquettes électroniques.

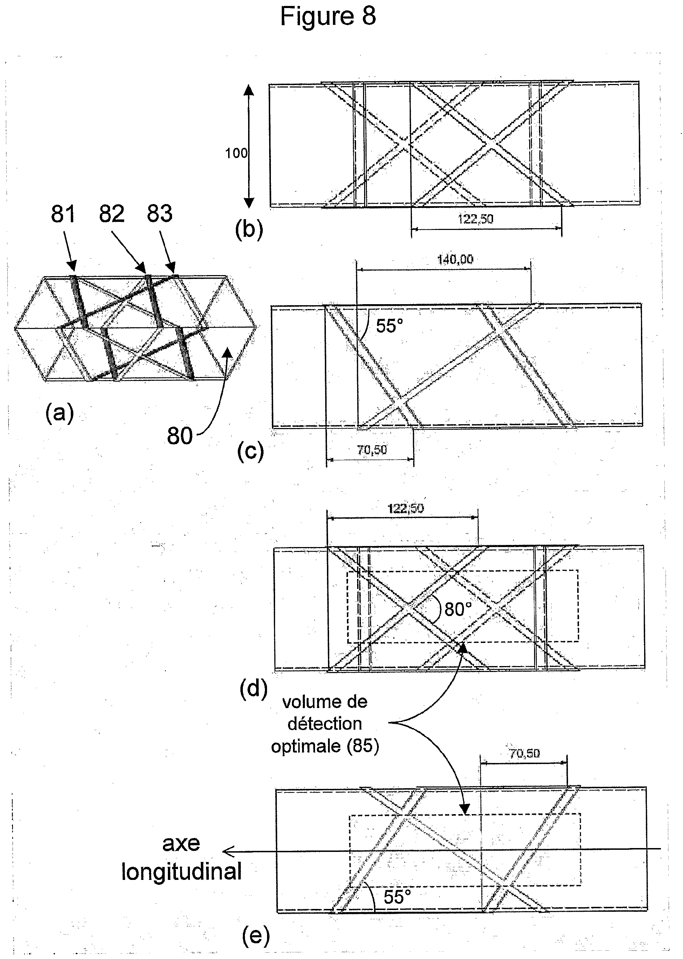

La figure 8a représente un exemple de réalisation d'un réseau à trois antennes pour la détection dans un tunnel (80) de section carrée 100 cm x 100 cm. Cet exemple ne fait pas partie de l'invention.

Les éléments conducteurs d'antennes 81, 82 et 83 sont coplanaires aux plans formant le tunnel (80).

Les figures 8b à 8e représentent le dessin des antennes sur les quatre côtés du tunnel (80) pour le réseau illustré par 8a :
- 8b est la face avant (en pointillés le dessin de la face arrière),
- 8c est le dessus du tunnel,
- 8d est la face arrière (en pointillés la face arrière), et
- 8e est le dessous du tunnel.

Deux antennes de forme « boucle » quadrilatère (81 et 82) se coupent sur les côtés latéraux du tunnel (80), avec un angle compris entre 60° et 120°, par exemple 80°, de telle sorte que la droite d'intersection de leur plan traverse le tunnel sensiblement à mi-hauteur. Les figures 8b et 8d illustrent la croix formée par l'intersection des deux antennes, les centres des deux croix formant la droite d'intersection sont situés sensiblement à mi-hauteur du tunnel. On entend par « boucle », le fait que les antennes sont constituées d'une ligne conductrice (par exemple un fil de cuivre) qui boucle quasiment sur elle-même : la forme obtenue est alors presque fermée (les deux extrémités de la ligne conductrice sont reliées aux moyens interrupteurs (5)).

Les antennes 81 et 82 ne sont pas perpendiculaires à l'axe longitudinal du tunnel, mais forment un angle inférieur à 90°, par exemple 60°, 45° ou 55° comme illustré par l'exemple de la figure 8, avec l'axe du tunnel. Les figures 8c et 8e illustrent bien cette inclinaison.

Les plans formant ces deux antennes 81 et 82 coupent ainsi le tunnel (80) de façon oblique.

La troisième antenne (83) du réseau coupe perpendiculairement les deux antennes 81 et 82 de façon à ce que les droites d'intersection des plans des antennes 81 et 83 ainsi que 82 et 83 coupent le tunnel en passant sensiblement dans une zone de détection optimale (85) centrée, par exemple un parallélépipède dont la section est 50% de celle du tunnel.

Dans l'exemple de la figure 8, le plan de l'antenne 83 est vertical, traverse le tunnel de façon oblique et sa normale est perpendiculaire aux normales des plans des deux autres antennes.

L'ensemble des intersections des antennes de ce dispositif passe, encore une fois, par le centre du tunnel permettant de retrouver de la sorte le volume de détection optimale (40) centré dans le tunnel.

Dans l'exemple de la figure 8, toute étiquette électronique traversant le tunnel fait un angle d'au plus 45° avec l'une des antennes : la lecture est donc optimisée.

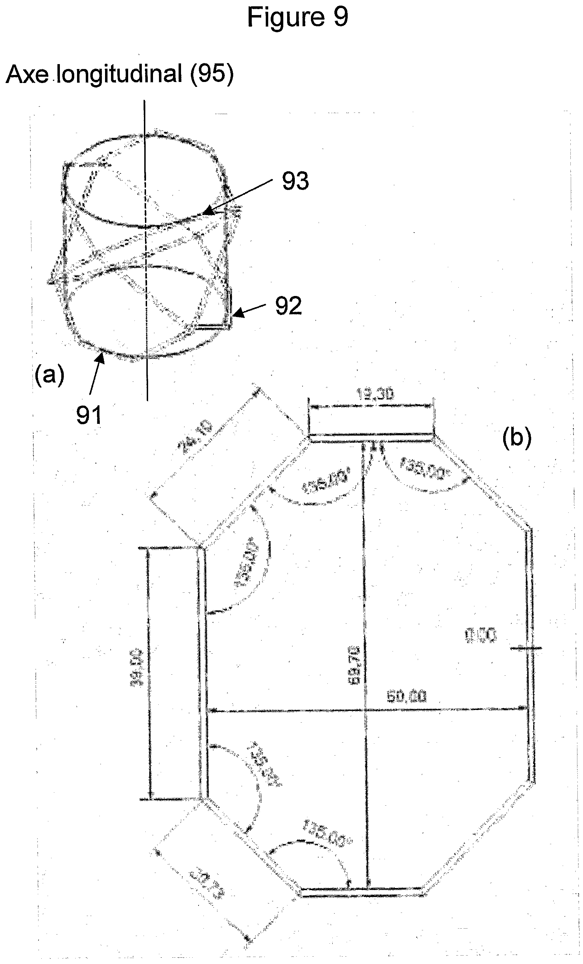

La figure 9 illustre un autre mode de réalisation d'un réseau selon la présente invention à l'aide de 3 antennes (91, 92 et 93).

Ce mode de réalisation permet de définir un tunnel (90) de détection de forme sensiblement cylindrique de diamètre 50 cm.

Chacune des antennes est une « boucle » octogonale dont chacun des angles a la valeur de 135°. La plus petite largeur de l'octogone fait 50 cm, et la plus grande longueur fait environ 70 cm. Les trois antennes sont identiques.

L'axe longitudinal (95) du tunnel (90) passe par le centre de chacune des antennes et la grande longueur de chacune des antennes est inclinée par rapport à l'axe longitudinal du tunnel de sorte à définir le rayon du tunnel, par exemple d'un angle d'environ 45°. Les trois antennes sont disposées de façon symétrique dans le réseau, images l'une de l'autre par rotation de ± 120° autour de l'axe longitudinal (95).

De ce fait, on voit bien que les intersections des antennes passent également par le centre du cylindre et permet de retrouver un volume de détection optimale centré.

Toute étiquette traversant le réseau fait alors face à trois plans de détection inclinés. Ainsi l'étiquette est au moins lue par l'une des antennes avec un angle inférieur à 45°.

## Revendications

1. Réseau d'antennes pour la lecture ou l'écriture sans contact d'étiquettes électroniques (3) dans un volume de détection, comprenant trois ou quatre antennes planes et indépendantes (91, 92, 93 ; 31, 32, 33, 34) connectés séquentiellement à un unique lecteur (4) par des moyens interrupteurs (5), dans lequel :
- les plans des antennes traversent un volume de lecture/écriture optimale (40) centré dans ledit volume de détection, lesdits plans des antennes se coupant au centre du volume de détection ;
- pour tout couple d'antennes desdites antennes, l'intersection de leurs plans est comprise dans le volume de lecture/écriture optimale,
- ledit volume de détection comprenant une extrémité d'entrée et une extrémité de sortie chacune délimitée par des antennes,
**caractérisé en ce que** les antennes sont disposées de telle sorte que toute direction dans ledit volume de lecture/écriture optimale fait un angle d'au plus 45° avec l'un au moins des plans desdites antennes, et **en ce que** chacune des extrémités d'entrée et de sortie est délimitée par au moins un côté de chacune des trois ou quatre antennes.

2. Réseau d'antennes selon la revendication 1, **caractérisé en ce que** ledit volume de lecture/écriture optimale a une section similaire et une surface comprise entre 10 et 75% de celle dudit volume de détection.

3. Réseau d'antennes selon la revendication 1 ou 2, **caractérisé en ce qu'**il comprend trois antennes (91, 92, 93) octogonales décalées de 120° autour de l'axe longitudinal dudit volume de détection.

4. Réseau d'antennes selon la revendication 1 ou 2, **caractérisé en ce qu'**il comprend quatre antennes (31, 32, 33, 34).

5. Réseau d'antennes selon la revendication précédente, **caractérisé en ce que** lesdites antennes (31, 32, 33, 34) sont rectangulaires et le volume de détection est un parallélépipède rectangle et **en ce que** chaque antenne (31, 32, 33, 34) traverse le volume de détection depuis l'un des côtés de l'extrémité d'entrée du volume de détection jusqu'au côté opposé de l'extrémité de sortie.

6. Réseau d'antennes selon l'une des revendications précédentes, **caractérisé en ce que** lesdits moyens interrupteurs (5) interfaçant ledit lecteur (4) et lesdites antennes sont commandés par ledit lecteur (4) et permettant d'alimenter indépendamment en énergie lesdites antennes.

7. Réseau d'antennes selon l'une quelconque des revendications précédentes, **caractérisé en ce qu'**il comprend, en outre, un blindage contre le parasitage et la pollution extérieurs.

8. Système de détection d'étiquettes électroniques (3) placées dans un volume de détection, comprenant au moins deux réseaux d'antennes selon l'une quelconque des revendications précédentes, **caractérisé en ce que** lesdits réseaux d'antennes sont imbriqués les uns dans les autres et décalés les uns par rapport aux autres.

9. Système de détection selon la revendication précédente, **caractérisé en ce que** les décalages entre lesdits réseaux sont sensiblement égaux à la largeur du volume du volume de lecture/écriture optimale dans l'orientation desdits décalages.

10. Système de détection selon la revendication 8 ou 9, **caractérisé en ce que** le lecteur (4) est apte à piloter les moyens interrupteurs (5) pour alimenter séquentiellement lesdites antennes une à une, réseau après réseau.

11. Procédé de lecture/écriture d'étiquette électronique dans un réseau d'antennes selon la revendication 1 **caractérisé en ce qu'**il comprend, lors du passage d'une étiquette dans ledit réseau, successivement et pour chacune des antennes :
- une étape d'accord de l'antenne,
- une étape d'alimentation en puissance de l'antenne par un multiplexeur piloté par ledit lecteur,
- une étape de lecture/écriture de ladite étiquette électronique par le lecteur,
- une étape d'interruption de l'alimentation de l'antenne par ledit multiplexeur, et
- une étape de désactivation de l'accord de ladite antenne.

12. Procédé de lecture/écriture d'étiquette électronique dans un réseau d'antennes selon la revendication précédente, **caractérisé en ce que** ladite étape d'accord ou de désactivation de l'accord comprend une étape de commutation, par le dit moyen interrupteur, de l'antenne de l'arrangement avec son circuit passif associé pour l'activation ou la désactivation de l'accord.

13. Procédé de lecture/écriture d'étiquette électronique dans un réseau d'antennes selon la revendication 11, **caractérisé en ce qu'**il comprend en outre une étape préalable de détection, par un capteur relié auxdits moyens interrupteurs et au lecteur, d'une étiquette dans ledit réseau.

## Patentansprüche

1. Antennenanordnung für das kontaktlose Lesen oder Schreiben von elektronischen Etiketten (3) in einem Detektionsvolumen, umfassend drei oder vier ebene und unabhängige Antennen (91, 92, 93; 31, 32, 33, 34), die der Reihe nach über Schaltmittel (5) mit einem einzigen Leser (4) verbunden sind, wobei:
- die Ebenen der Antennen durch ein optimales Lese-/Schreibvolumen (40) verlaufen, das im Detektionsvolumen zentriert ist, wobei sich die Ebenen der Antennen im Zentrum des Detektionsvolumens schneiden;
- bei jedem Antennenpaar der Antennen der Schnittpunkt ihrer Ebenen im optimalen Lese-/Schreibvolumen umfasst ist,
- wobei das Detektionsvolumen ein Eingangsende und ein Ausgangsende umfasst, die jedes von Antennen begrenzt werden,
**dadurch gekennzeichnet, dass** die Antennen derart angeordnet sind, dass jede Richtung im optimalen Lese-/Schreibvolumen einen Winkel von höchsten 45° zu mindestens einer der Ebenen der Antennen bildet, und dadurch, dass jedes der Eingangs- und Ausgangsenden von mindestens einer Seite jeder der drei oder vier Antennen begrenzt wird.

2. Antennenanordnung nach Anspruch 1, **dadurch gekennzeichnet, dass** das optimale Lese-/Schreibvolumen einen ähnlichen Querschnitt und eine Fläche im Bereich zwischen 10 und 75 % derjenigen des Detektionsvolumens aufweist.

3. Antennenanordnung nach Anspruch 1 oder 2, **dadurch gekennzeichnet, dass** sie drei Achteckantennen (91, 92, 93) umfasst, die um 120° um die Längsachse des Detektionsvolumens versetzt sind.

4. Antennenanordnung nach Anspruch 1 oder 2, **dadurch gekennzeichnet, dass** sie vier Antennen (31, 32, 33, 34) umfasst.

5. Antennenanordnung nach dem vorstehenden Anspruch, **dadurch gekennzeichnet, dass** die Antennen (31, 32, 33, 34) rechteckig sind und das Detektionsvolumen ein Quader ist, und dadurch, dass jede Antenne (31, 32, 33, 34) von einer der Seiten des Eingangsendes des Detektionsvolumens bis zur gegenüberliegenden Seite des Ausgangsendes durch das Detektionsvolumen verläuft.

6. Antennenanordnung nach einem der vorstehenden Ansprüche, **dadurch gekennzeichnet, dass** die Schaltmittel (5), die eine Schnittstelle zum Leser (4) und den Antennen bilden, vom Leser (4) gesteuert werden und es ermöglichen, die Antennen unabhängig mit Energie zu speisen.

7. Antennenanordnung nach einem der vorstehenden Ansprüche, **dadurch gekennzeichnet, dass** sie weiter eine Abschirmung gegen die Störbeeinflussung und die Verschmutzung von außen umfasst.

8. System zur Detektion von elektronischen Etiketten (3), die in einem Detektionsvolumen platziert sind, umfassend mindestens zwei Antennenanordnungen nach einem der vorstehenden Ansprüche, **dadurch gekennzeichnet, dass** die Antennenanordnungen ineinander verschachtelt und zueinander versetzt sind.

9. Detektionsvolumen nach dem vorstehenden Anspruch, **dadurch gekennzeichnet, dass** die Versätze zwischen den Anordnungen im Wesentlichen gleich der Breite des Volumens des optimalen Lese-/Schreibvolumens in der Ausrichtung der Versätze sind.

10. Detektionsvolumen nach Anspruch 8 oder 9, **dadurch gekennzeichnet, dass** der Leser (4) die Schaltmittel (5) ansteuern kann, um die Antennen einzeln der Reihe nach, Anordnung für Anordnung, zu speisen.

11. Verfahren zum Lesen/Schreiben eines elektronischen Etiketts in einer Antennenanordnung nach Anspruch 1, **dadurch gekennzeichnet, dass** es beim Durchlauf eines Etiketts in der Anordnung nacheinander und bei jeder der Antennen umfasst:
- einen Schritt des Abstimmens der Antenne,
- einen Schritt des Speisens der Antenne mit Leistung durch einen Multiplexer, der vom Leser angesteuert wird,
- einen Schritt des Lesens/Schreibens des elektronischen Etiketts durch den Leser,
- einen Schritt des Unterbrechens der Speisung der Antenne durch den Multiplexer, und
- einen Schritt des Deaktivierens der Abstimmung der Antenne.

12. Verfahren zum Lesen/Schreiben eines elektronischen Etiketts in einer Antennenanordnung nach dem vorstehenden Anspruch, **dadurch gekennzeichnet, dass** der Schritt des Abstimmens oder des Deaktivierens der Abstimmung einen Schritt des Umschaltens, durch das Schaltmittel, der Antenne der Anordnung mit ihrer zugehörigen passiven Schaltung für das Aktivieren oder das Deaktivieren der Abstimmung umfasst.

13. Verfahren zum Lesen/Schreiben eines elektronischen Etiketts in einer Antennenanordnung nach Anspruch 11, **dadurch gekennzeichnet, dass** es weiter einen vorausgehenden Schritt des Detektierens, durch einen mit den Schaltmitteln und mit dem Leser verbundenen Sensor, eines Etiketts in der Anordnung umfasst.

## Claims

1. An antenna array for contact-free reading or writing of electronic tags (3) in a detection volume, comprising three or four independent planar antennas (91, 92, 93; 31, 32, 33, 34) connected in sequence to a single reader (4) by switching means (5), wherein:
- the planes of the antennas pass through an optimum reading/writing volume (40) centred in said detection volume, said antenna planes intersecting at the centre of the detection volume;
- for any antenna pair of said antennas, the intersection of their planes is included in the optimum reading/writing volume,
- said detection volume comprising an input end and an output end, each delimited by antennas,
**characterised in that** the antennas are arranged so that any direction in said optimum reading/writing volume makes an angle of more than 45° with at least one of the planes of said antennas and **in that** each of the input and output ends is delimited by at least one side of each of three or four antennas.

2. The antenna array according to claim 1, **characterised in that** said optimum reading/writing volume has a similar cross-section to and an area of between 10 and 75% of that of said detection volume.

3. The antenna array according to claim 1 or 2, **characterised in that** it comprises three octagonal antennas (91, 92, 93) offset by 120° about the longitudinal axis of said detection volume.

4. The antenna array according to claim 1 or 2, **characterised in that** it comprises four antennas (31, 32, 33, 34) .

5. The antenna array according to the preceding claim, **characterised in that** said antennas (31, 32, 33, 34) are rectangular and the detection volume is a rectangular parallelepiped and **in that** each antenna (31, 32, 33, 34) passes through the detection volume from the input end side of the detection volume to the opposite, output end side.

6. The antenna array according to one of the preceding claims, **characterised in that** said switching means (5) interfacing said reader (4) and said antennas are controlled by said reader (4) and allow independent powering of said antennas.

7. The antenna array according to any one of the preceding claims, **characterised in that** it comprises, in addition, a shielding against interference and external pollution.

8. A detection system for detecting electronic tags (3) placed in a detection volume, comprising at least two antenna arrays according to any one of the preceding claims, **characterised in that** said antenna arrays are nested inside each other and offset with respect to one another.

9. The detection system according to the preceding claim, **characterised in that** the offsets between said arrays are substantially equal to the width of the volume of the optimum reading/writing volume in the direction of said offsets.

10. The detection system according to claim 8 or 9, **characterised in that** the reader (4) is capable of controlling switching means (5) for sequentially powering said antennas one by one, array after array.

11. A method for reading/writing an electronic tag in an antenna array according to claim 1, **characterised in that** it comprises, during the passage of a tag in said array, successively and for each of the antennas:
- a step of tuning the antenna,
- a step of powering the antenna by means of a multiplexer controlled by said reader,
- a step of reading/writing said electronic tag by the reader,
- a step of interrupting the powering of the antenna by said multiplexer, and
- a step of deactivating the tuning of said antenna.

12. The method for reading/writing an electronic tag in an antenna array according to the preceding claim, **characterised in that** said tuning step or tuning deactivation step comprises a step of changing over, by said switching means, the antenna of the arrangement with its associated passive circuit in order to activate or deactivate the tuning.

13. The method for reading/writing an electronic tag in an antenna array according to claim 11, **characterised in that** it further comprises a prior step of detecting, by a sensor connected to said switching means and to the reader, a tag in said array.
